# EUROPEAN PATENT APPLICATION

(11) **EP 2 628 529 A1**
(43) Date of publication of application: **21.08.2013**
(21) Application number: 13166491.4
(22) Date of filing: 11.05.2009
(51) Int. Cl.: B01D 65/00, B01D 61/10, B01D 61/20, B01D 61/58, B01D 63/12, B01D 63/10, B01D 65/02, B06B 1/18, F16J 13/12, B65D 85/20

(54) **Modular cross-flow filtration system**

(30) Priority: 09.05.2008 GB 0808464
(62) Divisional of application: 09742361.0
(71) Applicant: H2Oil & Gas Ltd, Riverside Business Park Irvine KA11 5DD (GB)
(72) Inventor: Theron, Douglas Arnoldus, Kilmarnock, Ayrshire KA3 2HG (GB); McMonagle, Anthony John, Glengarnoch, Ayrshire KA14 3BU (GB); McNulty, Mark Albert, Kilmarnock, Ayrshire KA1 2RU (GB); Barrie, Scott Alexander, East Kilbride, G74 4TR (GB)
(74) Representative: Naismith, Robert Stewart

(57) **Abstract**

A filtration system (10) comprises an array of filtration vessels (12) mounted on support assemblies (14). The or each vessel (12) houses a number of primary stage filtration elements (16) in the form of microfiltration and/or ultrafiltration membranes and a plurality of secondary stage filtration elements (18) in the form of nanofiltration and/or reverse osmosis filtration membranes. The vessel (12) has an inlet port (20) for directing a fluid feed through the filtration membranes (16,18) and a central conduit (22) receives permeate produced by the filtration membranes (16, 18). A chamber (24) collects and directs concentrate from the vessel (12) via a concentrate outlet port (26). A permeate chamber (28) receives permeate from the membranes (18) and from the membranes of at least one other vessel (12) and an outlet port (30) directs permeate from the chamber 28. The permeate outlet ports (30) and the permeate chambers (28) of the vessels (12) are interconnected.

## Description

### FIELD OF THE INVENTION

This invention relates to filtration membrane systems and, in particular, but not exclusively, to modular filtration membrane systems.

### BACKGROUND TO THE INVENTION

Many systems have been developed for water filtration including, for example, media bed filtration; microfiltration and ultrafiltration membrane filtration; and reverse osmosis and nanofiltration membrane filtration. Each system typically involves feeding water through the filtration system in order to remove particulates and/or reduce the concentration of ions in the feed, thereby producing a concentrate product output and a permeate product output. Systems may also comprise a number of filtration stages.

However, there are a number of drawbacks associated with existing filtration systems.

For example, existing systems typically involve a complex system of interconnected filtration vessels, this requiring significant numbers of connection pipes and hoses. As such, the systems have a large footprint and can be of significant weight. This is of concern, for example, in the oil and gas industry, and in particular offshore applications, where space and weight capacity may be limited.

In addition, it will be recognised that the footprint and mass of a filtration system will be influenced by the efficiency of the filtration vessel or vessels in the system. For example, it has been found that the performance of filtration vessels may be degraded by leakage of a seal, typically one or more o-ring, provided between the feed flow and the permeate flow through the filtration membrane, thereby contaminating the permeate flow.

Leakage may be caused by a number of factors. For example, the seal may have been incorrectly installed resulting in the seal being cut, nipped, or twisted. Alternatively, the seal may have been omitted or the incorrect size or sealing material may have been used. Often, seal leakage is the result of wear caused by movement or deformation of the components within the vessel. For example, during start up and shutdown/rundown of the filtration membrane trains, a degree of wear can occur due to compression and decompression of the membranes, though as this process is carried out in a controlled manner, the possibility of damage or wear to the membranes can be limited. However, during plant trip conditions, that is, where an unexpected shutdown occurs, the risk of damage to the membranes is greater. During normal operation the filtration membranes encounter a degree of wear and tear, this process being accelerated during cleaning operations. For example, it will be recognised that where the membranes are subject to higher fouling conditions, the membranes require more frequent cleaning and the membrane working life may be reduced.

Clearances between the system components may be created, for example, by longitudinal movement of the components, tolerances in the dimensions of the vessel components and the like. Furthermore, wear may be incurred due to hydraulic vibration during operation and during filtration element replacement and removal.

In order to reduce wear, a number of spacers, or shims, are often used to pack the components in the vessel. A vessel end plate is then push fit into the end of the vessel and locked into place using a locking ring and a spring coil or the like. However, it has been found that this arrangement can be inaccurate and problematic.

As described above, fouling of the filtration membranes acts to reduce system performance. For example, particulate matter may accumulate over time, resulting in blockage of the pores of the filtration membrane. In order to overcome this, microfiltration and/or ultrafiltration membranes may be subjected to a reverse flow, known as backwashing, which assists in removing the accumulated particulates from the membrane. Reverse osmosis and/or nanofiltration membranes may be cleaned by forward flushing.

Alternatively, or in addition, cleaning agents may be introduced to assist in cleaning the membranes. The most common chemical used for disinfection of microfiltration and/or ultrafiltration membranes is chlorine, which acts as an oxidant. The cleaning flow is used to clean primary stage membranes. However, as oxidants are detrimental to some membrane types, including nanofiltration and/or reverse osmosis membranes, it is crucial that the cleaning chemicals are kept separate from those membranes during the cleaning/disinfection process.

### SUMMARY OF THE INVENTION

According to a first aspect of the present invention there is provided a support assembly for a filtration system, the support assembly comprising:
support portions for engaging upper and lower portions of a filtration vessel, the support portions adapted to be coupled together to secure the vessel between the portions.

The support assembly of the present invention assists in simplifying the arrangement and installation of the filtration vessels and reduces or eliminates the requirement for heavy, intricate and complex steel framework and interconnecting pipe work that may otherwise be required.

The support assembly may be modular. For example, the support portions may comprise a first portion adapted to engage a lower portion of the filtration vessel and a second portion adapted to engage an upper portion of the filtration vessel. Each mounting portion may be adapted to engage a single filtration vessel. Alternatively, each mounting portion may be adapted to engage a plurality of filtration vessels.

The assembly may further comprise a locking member adapted to secure the mounting portion together. In particular embodiments, the support portions may be adapted to be coupled together by a cap screw, pin, bolt or the like.

The support portions may be adapted for coupling together. For example, at least one of the support portions may comprise a male connection member adapted to engage a female connector portion on the other mounting portion.

The assembly may further comprise a locking plate adapted to engage a portion of at least two upper support portions to secure said support portions together. The locking plate may be constructed from any suitable material and, in particular embodiments, the locking plate may comprise a metallic material. Alternatively, the locking plate may comprise a plastic material. Beneficially, the use of a plastic material facilitates use of the locking plate in harsh, marine environments and may assist in reducing the mass of the assembly.

The vessels may be adapted to be coupled together in an array. Beneficially, the provision of a modular filtration system according to embodiments of the present invention facilitates the construction of a vessel array of any number and arrangement. For example, the vessels may be coupled together in a three-by-three array, three-by-four array, four-by-four array or any other suitable arrangement.

The support portions may be constructed from any suitable material. In preferred embodiments, the support portions may be constructed from a plastic material.

The support portions may be of any suitable size and colour. For example, the support portions may be coloured to designate, for example, the type of filtration vessel supported thereon; the size of filtration element or other selected parameter.

The assembly may be configured to permit one or more of the vessels to be removed from the assembly. Beneficially, this may permit removal of a selected vessel for replacement or repair without having to disassemble the assembly.

According to another aspect of the present invention there is provided a securement system for a filtration vessel adapted to receive at least one internal component, the securement system comprising:
a clamp member coupled to the vessel, the clamp member adapted to exert a compressive force on the vessel component to facilitate securing the component in the vessel.

The securement system of the present invention facilitates accurate location and securement of the components of the vessel, thereby assisting in minimising wear that may otherwise result in leakage. For example, the clamp member may be adapted to be secured to the vessel in order to apply a compressive force to the vessel components, including for example, at least one of a filtration element, thrust ring, vessel end plate, feed inlet component or any other vessel component.

The clamp member may comprise an external threaded surface for engaging an interior threaded surface of the vessel.

The clamp member may comprise an interior surface configuration adapted to facilitate coupling of the clamp member to the vessel. Any suitable configuration may be used to facilitate location of the clamp member and, in particular embodiments, the interior surface may be castellated. The clamp member may be of any suitable form. For example, where the vessel is substantially circular, the clamp member may be substantially circular.

The clamp member may be hollow. In particular embodiments, the clamp member may comprise an annular ring or the like.

The clamp member may be adapted to engage a tool for facilitating turning of the clamp member. For example, the tool may be configured to engage the castellations of the clamp member to facilitate rotation of the clamp member.

According to another aspect of the present invention there is provided a filtration system having at least two vessels adapted to be coupled together, each vessel comprising:
a housing adapted to receive a filtration element for filtering a fluid feed;
an outlet port for directing concentrate produced by the filtration element from the vessel;
a chamber adapted to receive permeate produced by the filtration element of the vessel and the filtration element of at least one other vessel; and
an outlet port for directing permeate received in the chamber from the vessel.

According to another aspect of the present invention there is provided a vessel for use in a filtration system having at least two vessels, the vessel comprising:
a housing adapted to receive a filtration element for filtering a fluid feed;
an outlet port for directing concentrate produced by the filtration element from the vessel;
a chamber adapted to receive permeate produced by the filtration element of the vessel and the filtration element of at least one other vessel; and
an outlet port for directing permeate received in the chamber from the vessel.

The vessels may be adapted to be directly coupled together. For example, at least one of vessel ports may be directly coupled to a port of another vessel.

A filtration system is provided by an assembly which is relatively compact and which is capable of occupying a small footprint. This is particularly beneficial where space is limited such as on an oil platform, a vessel or the like. Where previously a permeate pipe or hose connection would be required from each vessel, this may no longer be required, thereby reducing the number of components for transport and assembly and assisting in reducing the volume / mass of the system. Furthermore, the provision of a permeate header to connect each vessel is no longer required such that the vessels may be stacked closer together and the end clearance distances for access to the vessels can be reduced, further reducing the footprint of the system.

The, or each, vessel may further comprise a chamber adapted to receive concentrate produced by the filtration element of the vessel and the filtration element of at least one other vessel. Thus, concentrate flow from each vessel can be integrated into a single concentrate outlet or directed to the filtration element of at least one other vessel as required.

The, or each, vessel may further comprise a conduit for directing permeate from the vessel to the chamber. The conduit is adapted to isolate the permeate produced by the filtration element from concentrate produced by the filtration element.

The, or each, vessel may further comprise a sampling port adapted to facilitate permeate testing. The sampling port may be adapted to facilitate testing of permeate from a single vessel. Alternatively, the sampling port may be adapted to facilitate testing of permeate from the at least two vessels, for example, permeate received in the permeate chamber. In particular embodiments, the sampling port comprises a valve or the like. The valve may comprise a valve member or quill which is adapted to move relative to the vessel to permit testing of the permeate. In particular embodiments, the quill may be adapted to enter the conduit to facilitate testing of permeate from a single vessel. The quill may also be adapted to enter the chamber to permit testing of permeate in the chamber.

The vessels may be coupled together in any suitable configuration. For example, the vessels may be coupled together in a parallel arrangement, series arrangement or a combination of parallel and series arrangements. The vessel may comprise at least one connection port for coupling the vessel to at least one other vessel. In particular embodiments, the vessels may be directly connected together via the connection ports. Advantageously, this permits interconnection between the vessels in a parallel arrangement without the requirement for additional piping or hoses.

The ports may be provided at any suitable location on the vessel. In particular embodiments, the permeate outlet port may be located at the side of the vessel. The vessel arrangement provides for simplified construction and operation of the filtration system.

The, or each, vessel may comprise a plurality of filtration elements. The filtration elements may be of any suitable size or shape. In particular embodiments, the filtration elements may be of circular cross-sectional shape.

The filtration elements may be of any suitable form and, in particular embodiments, the elements may comprise filtration membranes. For example, at least one of the filtration elements may comprise an eight inch (203.2mm) filtration membrane. Alternatively, or in addition, at least one of the filtration elements may comprise a sixteen inch (406.4mm) membrane. Alternatively, or in addition, at least one of the filtration elements may comprise an eighteen inch (457.2mm) membrane.

One or more of the filtration elements may comprise at least one of a reverse osmosis membrane and a nanofiltration membrane. At least one of the filtration elements may comprise at least one of a microfiltration membrane and an ultrafiltration membrane.

The vessel may be adapted to house at least two filtration elements, the filtration elements comprising at least a primary stage filtration element and a secondary stage filtration element. In particular embodiments, a plurality of filtration elements are provided in each of the primary and secondary stages.

The vessel may comprise or define a connection device for location between the at least one primary stage filtration element and the at least one secondary stage filtration element. The device may be coupled to at least one of the filtration elements, thereby facilitating interconnection between the filtration elements. Alternatively, or in addition, the device may form a spacer between the filtration elements. The device may define a chamber or void between the filtration elements, the device permitting fluid access to the connection ports.

The system may be adapted to split the fluid feed between the at least two filtration elements. Thus, the system may be adapted to provide a direct fluid feed to the at least two filtration elements. The system may be adapted to split the fluid feed in substantially opposing directions along the vessel. Accordingly, permeate output from a primary stage element in one vessel may be directed to either of the primary stage or second stage element in another vessel. Beneficially, this facilitates improved performance across the system as flow may be directed preferentially to the filtration elements having spare capacity. This may also facilitate cleaning or backwashing of the membrane of vessels using flow from at least one other vessel.

The vessel may further comprise a flow control device for directing fluid flow between the primary stage filtration element and the secondary stage filtration element. The flow control device may comprise any suitable device and, in particular embodiments, the flow control device may comprise a barrier member, valve or the like.

The system may be configured to permit testing of one or more selected filtration elements within a particular vessel and, in particular embodiments, the sampling port may be adapted to facilitate testing of permeate from one or more selected filtration element within a particular vessel.

The system may further comprise a securement system for securing the components within the, or each, vessel. The securement system may comprise a clamping member coupled to the vessel, the clamping member adapted to apply a compressive force to the vessel components.

The system may utilise flow pulsation to assist in removing particulate matter from at least one of the filtration elements. The flow pulsation may be achieved by any suitable means. For example, the system may comprise a rotary flow pulsation device adapted for location in a system fluid conduit, the device adapted to rotate in response to fluid flow over the device to produces fluid pulses. In particular embodiments, the device may be adapted for location in a backwash fluid conduit.

Alternatively, or in addition, the system may comprise an ultrasonic pulsation device adapted to produce ultrasonic excitation of particulate matter to assist in removing particulates from at least one of the filtration elements.

In a further alternative or additional embodiment, the system may comprise a valve adapted to produce flow pulses. For example, the valve may be adapted for repeated opening and closing to produce pulses in the fluid flow travelling through the valve.

The system may further comprise a support assembly for securing the filtration vessels together. The support assembly may comprise support portions for engaging upper and lower portions of a filtration vessel, the support portions adapted to be coupled together to secure the vessel between the support portions.

According to another aspect of the present invention there is provided a flow control device for location in a filtration system vessel, the device comprising:
a first chamber adapted to receive fluid from at least one of a first filtration element and a fluid inlet; and
a second chamber adapted to receive fluid from the first filtration element, the device arranged to direct fluid from the second chamber to at least one of a fluid outlet and a second filtration element.

In particular embodiments, the device may be arranged such that the first chamber is located adjacent to the first filtration element and the second chamber is located downstream from the first filtration element. In alternative embodiments, the device may be arranged such that the first chamber is located downstream from the filtration element and the second chamber is located adjacent to the first filtration element.

The first chamber may be adapted to receive permeate from the first filtration element. Alternatively, the first chamber may be adapted to receive concentrate from the first filtration element.

The flow control device may comprise any suitable device and, in particular embodiments, the flow control device may comprise a barrier member, valve or the like.

The flow control device may be constructed from any suitable material. For example, the flow control device may be constructed from a plastic, metal, ceramic, glass or other suitable material. In particular embodiments, the flow control device may be constructed from a plastic material and, in particular, a plastic which is resistant to cleaning agents, e.g. chlorine, and/or seawater/brine used in filtration systems.

The flow control device may be manufactured by any suitable process. For example, but not exclusively, the device may be constructed by an injection moulding process. The arrangement of the flow control device may be selected according to a selected system parameter, including for example, the degree of system fouling.

The flow control device may be constructed from a single component. Beneficially, the provision of a single piece device facilitates use of a low cost device. Alternatively, the device may be constructed from a plurality of components adapted to be coupled together. In particular embodiments, the device may be constructed from two parts.

Other aspects of the present invention relate to the use of a flow pulsation device for use in a filtration system.

Flow pulsation may advantageously be used to assist in the loosening of material in a filtration element, thereby mitigating or overcome blocking of the filtration element. Flow pulsation may also be used to assist in loosening material during cleaning of the membrane or backwash flow.

Flow pulsation may be achieved by any suitable arrangement, including for example, mechanical stimulation, ultrasonic stimulation or the like.

For example, in one embodiment, the flow pulsation device may, for example, comprise a rotor adapted for location in a backwash flow conduit. The rotor may be secured within the conduit by any suitable arrangement. In use, the rotor is adapted to rotate in response to backwash fluid flow over the rotor.

The device may further comprise at least one barrier member located in the fluid flow path. The barrier member may comprise at least one orifice for permitting fluid flow through the barrier member. In use, the orifice and rotor may be adapted to produce pulses in the fluid flow which assist in removing particulate matter from the filtration element.

In an alternative embodiment, flow pulsation may be achieved by rapid oscillation of a control valve.

In a further alternative embodiment, flow pulsation may be achieved by an ultrasonic transducer.

### BRIEF DESCRIPTION OF THE DRAWINGS

Embodiments of the present invention will now be described, by way of example only, with reference to the accompanying drawings, in which:
Figure 1 is a perspective view of an assembled filtration system according to an embodiment of the present invention;
Figure 2 is a longitudinal sectional view of a filtration vessel of the filtration system of Figure 1;
Figure 3 is an enlarged diagrammatic view of an end section of the filtration vessel of Figure 2;
Figure 4 is a perspective view of a bank of filtration vessels according to another embodiment of the present invention;
Figure 5 is a side view of the bank of filtration vessels of Figure 4;
Figure 6 is an enlarged diagrammatic view of an end section of the bank of filtration vessels of Figures 4 and 5;
Figure 7 is an enlarged longitudinal sectional view of part of the filtration vessel of Figure 2 during normal operation;
Figure 8 is a flow diagram of the filtration system during normal operation;
Figure 9 is an enlarged longitudinal sectional view of part of the filtration vessel during a backwash operation;
Figure 10 is a flow diagram of the filtration system during a backwash operation;
Figure 11 is an enlarged longitudinal sectional view of part of the filtration vessel during a cleaning operation;
Figure 12 is a flow diagram of the filtration system during primary stage membrane cleaning;
Figure 13 is a flow diagram of the filtration system during secondary stage membrane cleaning;
Figure 14 is a perspective view of a flow control device according to an embodiment of the present invention;
Figure 15 is a perspective cross-sectional view of an upstream portion of the flow control device of Figure 14;
Figure 16 is a perspective cross-sectional view of a downstream portion of the flow control device of Figures 14 and 15;
Figure 17 is an enlarged longitudinal sectional view of part of the filtration vessel of Figure 2 with the flow control device of Figures 14 to 16 during normal operation;
Figure 18 is a flow diagram of the filtration system with the flow control device of Figures 14 to 16 during normal operation;
Figure 19 is an enlarged longitudinal sectional view of part of the filtration vessel of Figure 2 with the flow control device of Figures 14 to 16 during a backwash operation;
Figure 20 is a flow diagram of the filtration system with the flow control device of Figures 14 to 16 during a backwash operation;
Figure 21 is an enlarged longitudinal sectional view of part of the filtration vessel of Figure 2 with the flow control device of Figures 14 to 16 during a cleaning operation;
Figure 22 is a flow diagram of the filtration system with the flow control device of Figures 14 to 16 during primary stage membrane cleaning;
Figure 23 is a flow diagram of the filtration system with the flow control device of Figures 14 to 16 during secondary stage membrane cleaning;
Figure 24 is a perspective view of a filtration system according to another embodiment of the present invention;
Figure 25 is a perspective view of a flow control device for use in the filtration system of Figure 24;
Figure 26 is a partial longitudinal sectional view of the flow control device of Figure 25;
Figure 27 is an enlarged longitudinal sectional view of part of the filtration vessel of Figure 2 with the flow control device of Figures 25 and 26 during normal operation;
Figure 28 is a flow diagram of the filtration system of Figure 24 with the flow control device of Figures 25 and 26 during normal operation;
Figure 29 is an enlarged longitudinal sectional view of part of the filtration vessel of Figure 2 with the flow control device of Figures 25 and 26 during a forward flush operation;
Figure 30 is a flow diagram of the filtration system of Figure 24 with the flow control device of Figures 25 and 26 during a forward flush operation;
Figure 31 is a longitudinal sectional view of part of the filtration vessel of Figure 2 with the flow control device of Figures 25 and 26 during a primary membrane forward cleaning operation;
Figure 32 is a flow diagram of the filtration system of Figure 24 with the flow control device of Figures 25 and 26 during a primary membrane forward cleaning operation;
Figure 33 is an enlarged longitudinal sectional view of part of the filtration vessel of Figure 2 with the flow control device of Figures 25 and 26 during a primary membrane reverse cleaning operation;
Figure 34 is a flow diagram of the filtration system of Figure 24 with the flow control device of Figures 25 and 26 during a primary membrane reverse cleaning operation;
Figure 35 is an enlarged longitudinal sectional view of part of the filtration vessel of Figure 2 during a secondary membrane forward cleaning operation;
Figure 36 is a flow diagram of the filtration system of Figure 24 during a secondary membrane forward cleaning operation;
Figure 37 is a perspective view of an assembled securement system for the filtration system according to an embodiment of the present invention;
Figure 38 is an exploded perspective view of the securement system of Figure 37;
Figure 39 is an enlarged longitudinal sectional view of the assembled securement system of Figures 37 and 38;
Figure 40 is a schematic diagram of a filtration system having a rotary pulsation device;
Figure 41 is a diagrammatic view of the rotary pulsation device of Figure 40;
Figure 42 is a schematic diagram of a filtration system having an ultrasonic pulsation device;
Figure 43 is a schematic diagram of a filtration system having a valve operated pulsation device;
Figure 44 is a perspective view of an assembled support assembly for a filtration system according to an embodiment of the present invention;
Figure 45 is a perspective view of a pair of support portions of the support assembly of Figure 44;
Figure 46 is a perspective view of a locking plate for use in the support assembly of Figures 44 and 45; and
Figure 47 is a perspective view of an alternative locking plate for use in the support assembly of Figure 44 and 45.

### DETAILED DESCRIPTION OF THE DRAWINGS

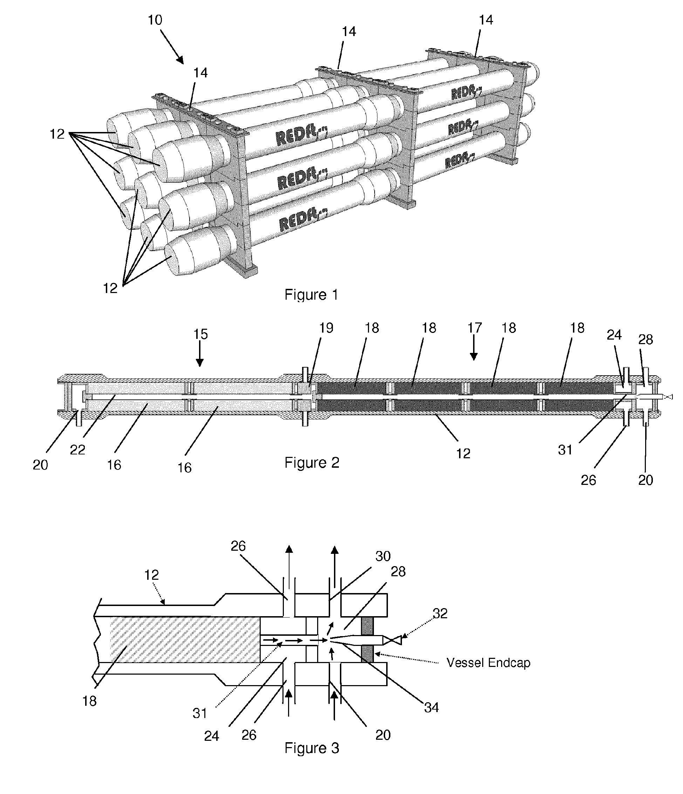

In reference initially to Figure 1 of the drawings, there is shown a perspective view of a modular filtration system 10 according to an embodiment of the present invention. The system 10 comprises an array of filtration vessels 12 mounted on three mounting assemblies 14. In the embodiment shown in Figure 1, the vessels 12 are arranged in a three-by-three array, though it will be understood that any suitable arrangement may be used where appropriate.

Referring to Figure 2 of the drawings, there is shown a longitudinal sectional view of one of the filtration vessels 12 for use in the filtration system 10. The vessel 12 has a first section 15 housing a number of primary stage filtration elements 16 in the form of microfiltration and/or ultrafiltration membranes. As shown in Figure 2, the membranes 16 are arranged in series. The vessel 12 also has a second section 17 housing a plurality of secondary stage filtration elements 18 in the form of nanofiltration and/or reverse osmosis filtration membranes arranged in series. It will be understood that while the embodiment shown in Figure 2 shows a plurality of primary stage and secondary stage membranes 16,18, each membrane stage may comprise a single membrane 16, 18 where appropriate. A centrally located connection device in the form of coupler 19 is located in the vessel 12 and the membranes 16, 18 are secured to the coupler 19.

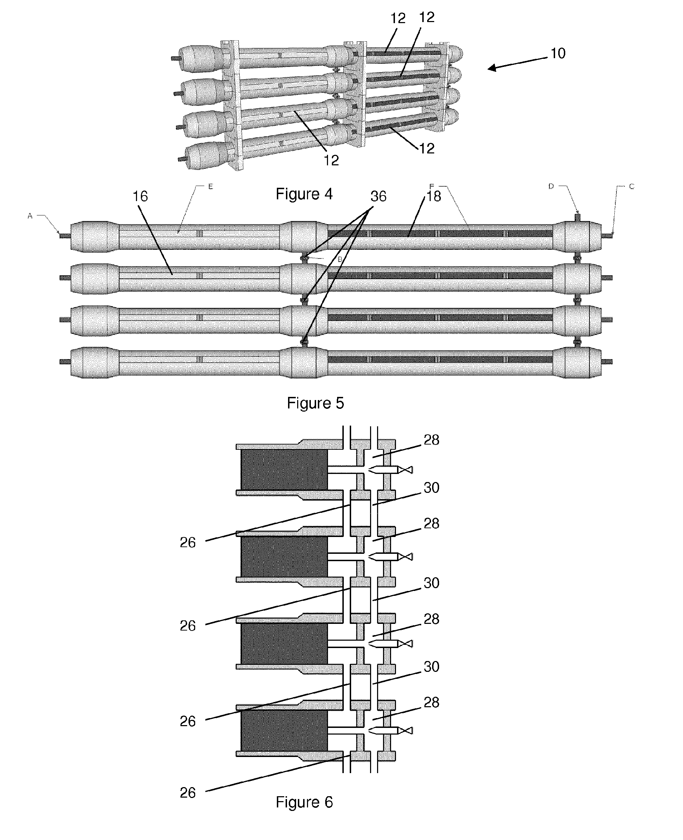

As shown in Figures 2 and 3, the vessel 12 is multi-ported, the vessel 12 having a side-mounted inlet port 20 for directing a fluid feed, such as seawater, through the filtration membranes 16,18. It will be recognised that while the inlet port is shown side-mounted, the inlet port 20 may be located at any suitable location, including for example, end mounted (as shown for example in Figures 4, 5 and 6). The vessel 12 further comprises a central conduit 22 for receiving permeate produced by the filtration membranes 16, 18.

As shown most clearly in Figure 3, which shows an enlarged diagrammatic view of an end section of the vessel 12, concentrate, e.g. brine, from the final secondary stage membrane 18 is collected in a concentrate chamber 24 and is removed from the vessel 12 via one or more concentrate outlet port 26.

The vessel 12 further comprises a permeate chamber 28 for receiving permeate from the membranes 18 and from the membranes of at least one other vessel 12. An outlet port 30 directs permeate from the chamber 28. The vessel 12 further comprises a permeate connector 31 providing a conduit from the central conduit 22 to the permeate chamber 28 while ensuring that the permeate is isolated from the concentrate in the system 10.

Each vessel 12 further comprises a sampling valve 32 located at an end of the vessel 12. The sampling valve 32 comprises a quill 34 which is adapted to enter the mouth of the permeate connector 31, thereby facilitating sampling of the permeate output from the vessel 12. The quill 34 is retractable to facilitate sampling of the permeate output from the permeate chamber 28.

In reference now also to Figures 4, 5 and 6, the system 10 comprises four vessels 12 connected together. Any suitable arrangement may be used and, in the embodiment shown in Figures 4, 5 and 6, the four vessels 12 are directly coupled together in parallel. Specifically, each vessel 12 comprises one or more substantially centrally located connection port 36 adapted to couple the vessel 12 to at least one other vessel 12, the connection ports 36 arranged for fluid communication with the coupler 19. The connection ports 36 can be used to feed fluid output from the primary stage membranes 16 of one vessel 12 to the secondary stage membranes 18 of another vessel or vessels 12. Alternatively, or in addition, the connection port 36 may be used to feed fluid output to the primary stage membrane 16 of another vessel 12 in order to facilitate backwashing of the respective primary stage membrane 16. The connection port 36 is also used to permit cleaning agents to be introduced to assist in cleaning the primary stage 16 and/or secondary stage membranes 18.

It will be recognised that the membranes may not foul at exactly the same rate with membranes subject to higher fouling having greater resistance to flow. In use, the connection ports 36 are adapted to permit preferential flow through the filtration system 10, thereby allowing balancing of membrane flux, that is, the flow per unit area through the membranes, across the vessels 12, even where some primary stage membranes 16 are offline for backwashing or cleaning.

The vessel 12 is adapted for use with multiple operating pressures, which could be up to 100 barg (10 MPa gauge pressure/ 10.1 MPa absolute pressure) or higher.

As shown most clearly in Figures 5 and 6, the permeate outlet ports 30 and the permeate chambers 28 of the vessels 12 are also interconnected, thereby creating a common permeate outlet/chamber.

The improved modular layout and arrangement of the filtration system 10 is simplified by utilising an integral permeate chamber 28, this arrangement removing the requirement to have a permeate pipe or hose connection connecting each vessel 12. In addition, the number of separate components in the system 10 is reduced such that system assembly time and, where required, disassembly time can be reduced. In addition, a separate permeate header connecting the permeate outlets 30 from each vessel 12 is no longer required, enabling the vessels 12 to be stacked closely together, resulting in a smaller overall footprint for the filtration system 10. Furthermore, the end clearance for passage access can be reduced, in turn resulting in a more compact footprint for the filtration system 10.

As shown in Figure 6, the concentrate outlet ports 26 are also interconnected such that concentrate may be transferred to another vessel 12 or to a drain or dump (not shown) as required.

Thus, the inlet, connection and outlet ports are arranged to facilitate assembly and operation of the filtration system 10 and to assist in reducing the footprint, mass and complexity of the system 10.

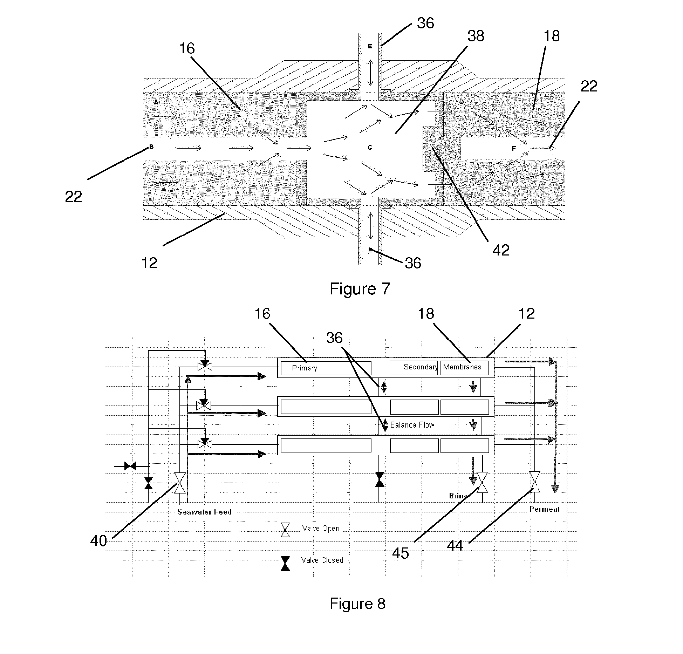

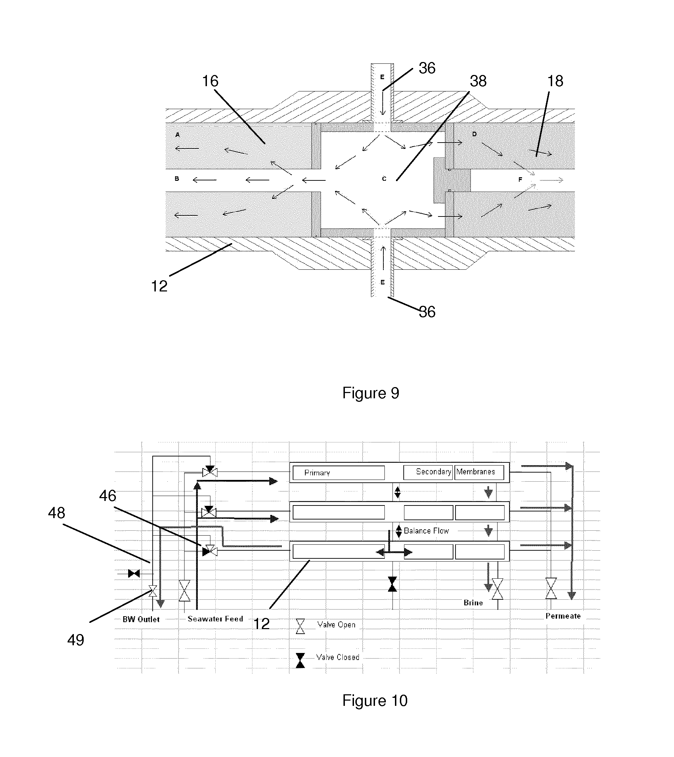

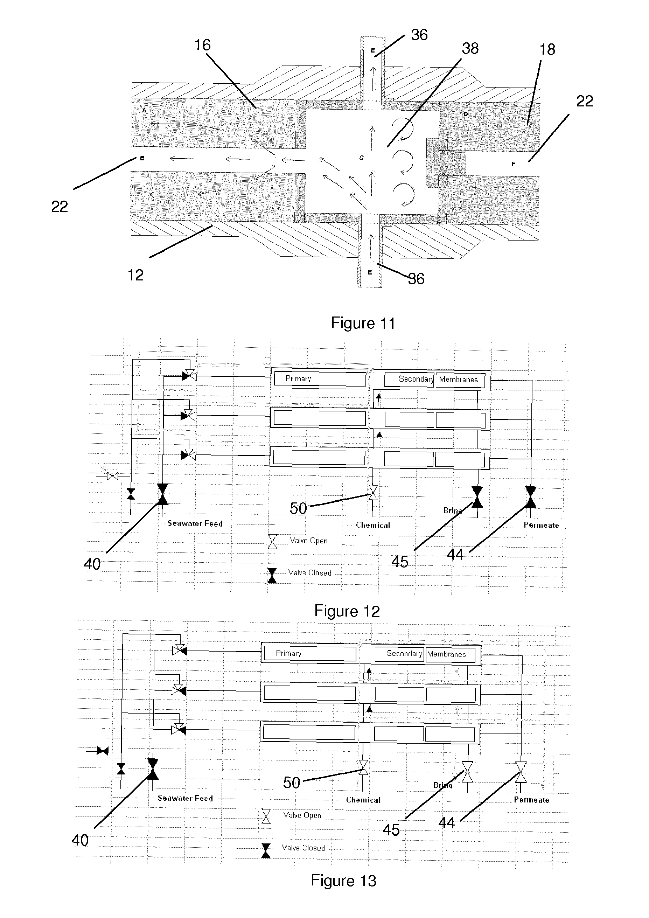

In reference now also to Figure 7 of the drawings, which shows an enlarged longitudinal sectional view of part of the filtration vessel 12, the vessel further comprises a chamber 38 located between the primary stage membranes 16 and the secondary stage membranes 18. The chamber 38 provides for fluid transfer between the membrane stages within the vessel 12 and between the vessels 12 via the connection ports 36. For example, the chamber 38 permits the transfer of forward fluid flow from the operating primary stage membranes 16 to the downstream secondary stage membranes 18 within each vessel 12, ensuring that a suitable feed to each stage is maintained during normal operation (Figures 7 and 8), during backwashing operations (Figures 9 and 10) or during cleaning operations (Figures 11, 12 and 13).

Operation of the system 10 will now be described with reference to Figures 7 to 13 of the drawings. In this arrangement, the primary stage membranes 16 comprise microfiltration and/or ultrafiltration membranes and are arranged to operate in dead-end mode, that is, all water entering the membrane exits as permeate product, with solids retained on the membrane surface. The primary membranes 16 are also of an in-to-out membrane type, that is, the membrane consists of hollow fibres, with water travelling through the lumen of the fibre and filtering through the fibre wall. The secondary stage membranes 18 comprise reverse osmosis membranes and/or nanofiltration membranes. The vessels 12 are directly connected via the connection ports 36.

Figures 7 and 8 show the filtration system 10 during normal operation. In use, valve 40 (shown white in Figure 8 to represent "valve open") is opened to permit fluid feed, in the form of seawater, to enter the primary stage membranes 16 of each vessel 12. Particulates are retained within the membranes 16, the primary stage membranes 16 acting as a pre-treatment for filtering particulate matter from the fluid feed. Produced permeate passes through the membranes 16 into the central collection conduit 22 and into the central chamber 38. The permeate is then passed through the secondary stage membranes 18 for further treatment. As shown in Figure 7, the vessel 12 further comprises a sealed cap 42 for preventing permeate travelling directly into the central permeate conduit 22 of the secondary stage membranes 18. The secondary stage membranes 16 are more suitable for removing smaller particulates and are capable of reducing the concentration of ions in the fluid feed, for example, in order to reduce the concentration of salt ions in seawater.

On passing through the secondary stage membranes 18, permeate is collected in the interconnected permeate chambers 28 (Figure 6) and a permeate outlet valve 44 (Figure 8) is opened to permit removal of the permeate from the filtration system 10. Concentrate is collected in the concentrate chambers 26 (Figure 6) and a concentrate outlet valve 45 (Figure 8) is opened to permit removal of the concentrate to a drain, dump or the like (not shown).

A portion of the permeate may also be directed to one or more of the other vessels 12 via the connection ports 36. The degree of transfer between the vessels 12 will depend on a number of factors, including the fouling state of the secondary stage membranes 18 and the capacity of the other vessels 12 in the system. This flow may be used, for example, in a backflow operation to assist in removing accumulated particulates from the primary stage membranes of another vessel 12 as will be described below with reference to Figures 9 and 10.

In this operation, the fluid feed to the vessel 12 to be backwashed is shut off by moving directional control valve 46. Fluid flow is reversed such that backwash fluid is directed into the central chamber 38 via the connection port 36 of one or more of the operating vessels 12. Backwash fluid from the connection port 36 comprises permeate from the primary stage membranes 16 of one or more other vessel 12 and a portion of the fluid provides a pre-filtered flow forwards through the secondary stage membranes 18 of the vessel 12 to maintain operation even during backwashing operations.

Another portion of the backwash fluid travels in the reverse direction through the primary stage membranes 16 to dislodge or otherwise assist in removing accumulated particulate matter from the primary membranes 16. An outlet line/conduit 48 on the feed side of the primary membranes 16 is fitted with an orifice plate, control valve or other pressure-reducing device (not shown) in order to maintain a differential pressure across the primary membranes 16 and to ensure sufficient flow for the backwashing operation. Where backwashing is in operation, a backwash control valve 49 is open to provide direction of removed particulates to a drain, dump or the like (not shown).

Another portion of the backwash fluid may traverse the chamber 38 and travel into another vessel 12 via connection port 36 as required.

Cleaning operations will now be described with reference to Figures 11, 12 and 13 of the drawings. In this operation, feed inlet valve 40, concentrate outlet valve 45 and permeate outlet valve 44 are closed. A chemical supply valve 50 is opened to permit a cleaning agent into the system 10. The cleaning agent is directed into the central chamber 38 via the connection port 36. The cleaning agent travels in the reverse direction through the primary stage membranes 16 in order to clean the membranes 16.

Another portion of the cleaning agent may traverse the central chamber 38 and pass to another vessel 12 to facilitate cleaning of the other vessel or vessels 12 as required. Depending on the degree of cleaning required and/or the type of chemical used, the remaining cleaning agent may be re-circulated to the cleaning system or directed to a drain or dump.

In order to further improve the performance of the filtration system 10, the system 10 further comprises a flow control device adapted for location in the central chamber 38. Different flow control devices may be selected for use in different operating conditions, including for example, the degree of membrane fouling. Flow control devices may be used in particular in medium or heavy fouling conditions as will be described. The flow control devices may be used with the filtration system 10 or alternatively the flow control devices may be used with other and/or existing filtration systems.

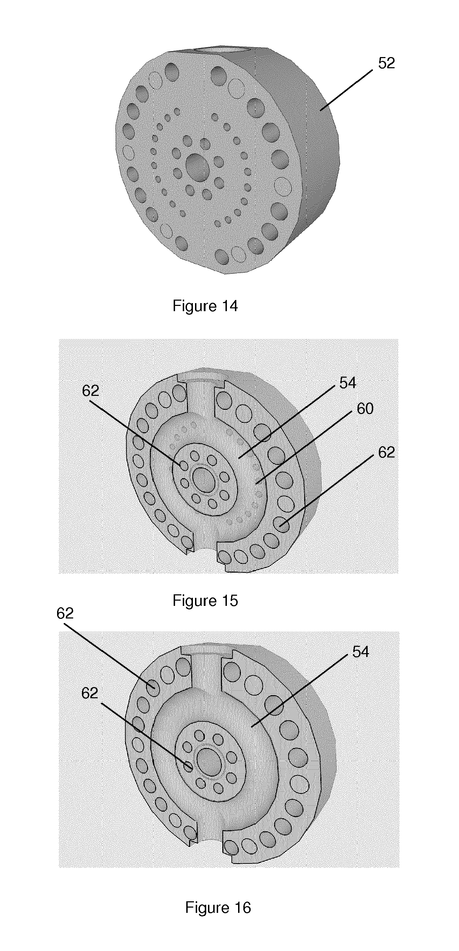

In reference initially to Figure 14 of the drawings, there is shown a perspective view of a flow control device in the form of a barrier plate 52. The barrier plate 52 is adapted for location in the central chamber 38 of the filtration vessel 12, thereby providing a discrete flow path between the primary stage membranes 16 and secondary stage membranes 18.

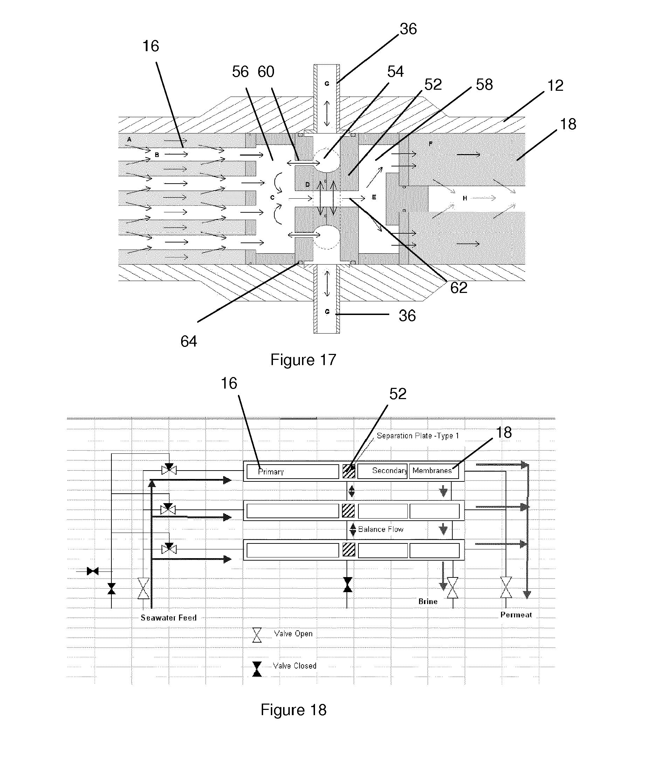

As shown in Figures 15 and 16, which show cross-sectional views of an upstream portion (Figure 15) and a downstream portion (Figure 16) of the barrier plate 52, and to Figure 17 which shows an enlarged longitudinal sectional view of the barrier plate 52 in situ, the barrier plate 52 is provided with a central annulus 54 which provides a fluid flow path between the connection ports 36 of the vessel 12. The barrier plate 52 forms two chambers 56 and 58 within the plate 52.

With reference to Figure 15, the barrier plate 52 comprises a number of holes defining bores 60 for providing a fluid flow path between the annulus 54 and the primary stage membranes 16. The bores 60 form the flow path from and to the vessel 12 via the connection ports 36, facilitating passage of balancing feed flow, cross flow, cleaning flow through the barrier plate 52.

As shown in Figures 15 and 16, the barrier plate 52 further comprises a number of holes defining bores 62 that extend through the barrier plate 52. The bores 62 provide a flow path from the primary stage membranes 16 to the secondary stage membranes 18, the bores 62 providing a longer flow path that will minimize or substantially eliminate the flow of cleaning agents to the downstream secondary stage membranes 18.

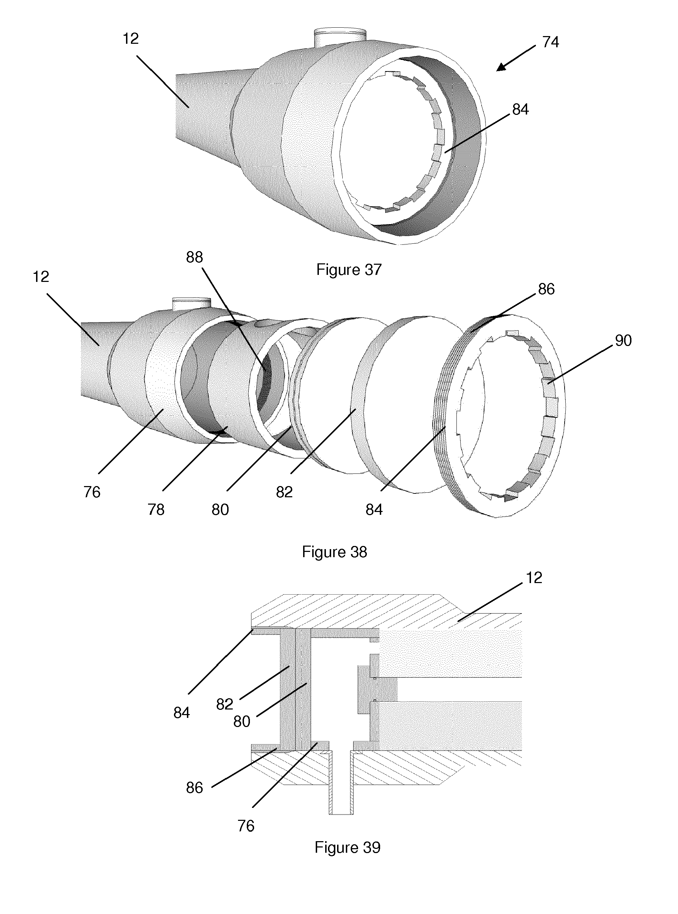

The barrier plate 52 is manufactured in two portions, fastened together and incorporating integral seals. External seals 64 between the barrier plate 52 and the vessel 12 may be used depending on the fit, overall length of the plate 52 and the sealing requirements of the system 10. The external connections on the barrier plate 52 are made oversize to allow for longitudinal dimensional variances of the vessel components and to allow for shimming, where required (e.g. in filtration systems not employing the securement system as described below in reference to Figures 37 to 39).

Figures 17 and 18 show the filtration system 10 comprising the barrier plate 52 during normal operation. In this arrangement, the primary stage membranes 16 comprise microfiltration and/or ultrafiltration membranes and are arranged to operate in dead-end mode. The primary membranes 16 are also adapted for operation in an out-to-in mode that is, the membrane consists of hollow fibres, with water travelling through the fibre wall into the lumen. The secondary stage membranes 18 comprise reverse osmosis membranes and/or nanofiltration membranes.

Feed flow is directed into each of the vessels 12, the feed passing through the primary stage membranes 16, filtering into the lumen of the hollow fibres and into the upstream chamber 56. The feed flow passes via through the bores 62 into the downstream chamber 58 and then into the secondary stage membranes 18 for further treatment. A portion of the flow from the upstream chamber 56 will pass to the other vessels 12 via the connection ports 36 to facilitate balanced production from the vessels 12 and/or to permit backwashing.

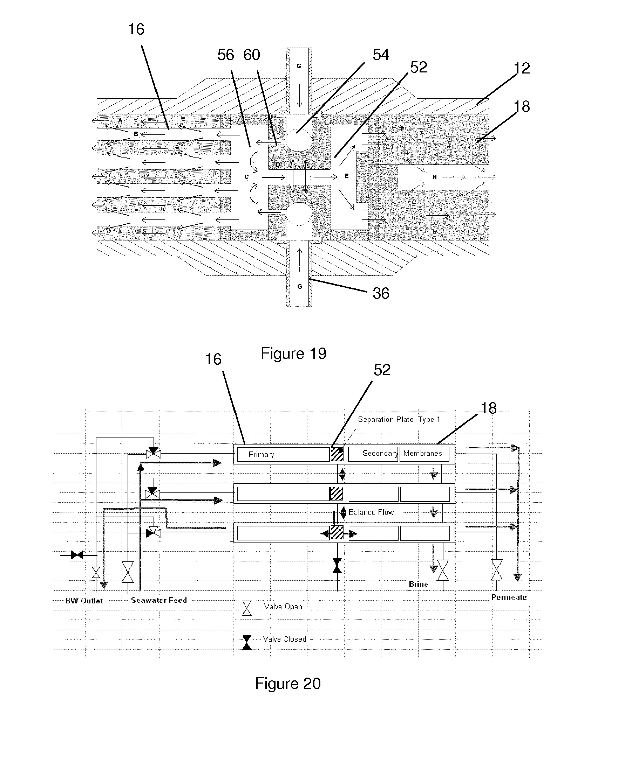

Figures 19 and 20 show the filtration system 10 having the barrier plate 52 during a backwash operation of the primary membrane 16. The inlet to the vessel 12 to be backwashed is closed. A portion of the backwash feed from the connection port 36 enters the upstream chamber 56 of the barrier plate 52 and passes backwards through the primary stage membranes 16 to the drain, dump or the like (not shown).

Another portion of the backwash fluid continues to flow forwards to the downstream chamber 58 and then into the secondary stage membranes 18 for further treatment. The overall permeate output from the system 10 is thus shared across the vessels 12.

Another portion of the backwash flow is directed around the annulus 54 to one or more of the other vessels via the connection ports 36.

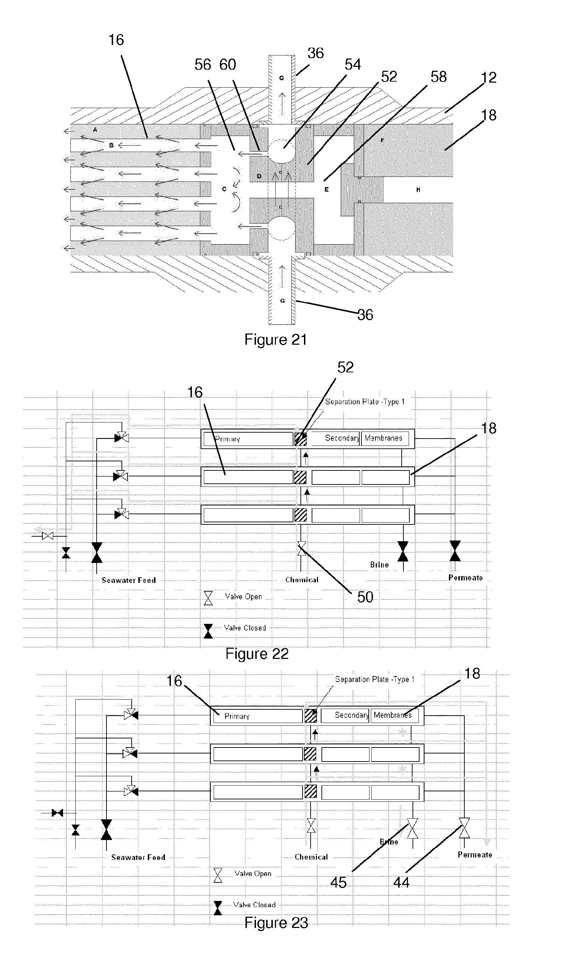

Figures 21, 22 and 23 show the filtration system 10 comprising the barrier plate 52 during cleaning operations. During disinfection with an oxidant, cleaning is conducted on all primary stage membranes 16 within the vessels 12 simultaneously. In use, the cleaning agent inlet valve 50 is opened to permit the cleaning agent to enter the barrier plate 52 via the connection port 36. A portion of the chemical agent is then directed to the upstream chamber 56 where it passes back through the primary stage membranes 16 and re-circulates to the cleaning system via the cleaning return line or to a drain or dump.

The remaining cleaning flow traverses the barrier plate 52 and feeds the other vessels 12, thus avoiding any unwanted direct contact with the secondary stage membranes 18. The plate 52 provides a longer passage to the secondary stage membranes 18, the secondary stage membrane flow being held stagnant by the closure of the permeate and concentrate outlet valves. Thus, the low pressure differential across the primary stage membranes 16 prevents forward flow of cleaning agent through the secondary membranes 18. In addition, performing a low pressure forward flush before production commences will assist in preventing any slippage of chemical, resulting from eddies, turbulence or leakage around the plate 52.

As shown in Figure 23, when it is desired to clean the secondary stage membranes 18, e.g. by an acidic or alkaline solution, the concentrate and permeate outlet valves 45, 44 are opened to permit flow of the cleaning agent through the secondary stage membranes 18.

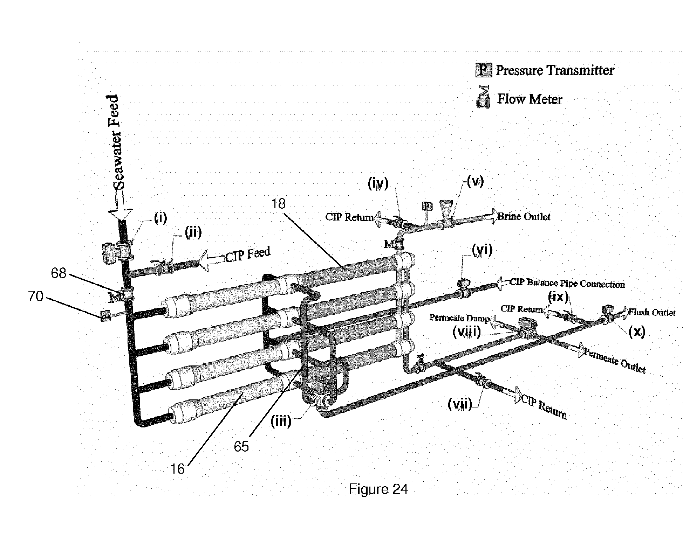

In reference now to Figure 24 of the drawings, there is shown a filtration system according to another embodiment of the present invention. In this embodiment, the primary stage membranes 16 comprise ultrafiltration membranes and are adapted for operation in cross flow mode, that is where water passes both across and through the membrane allowing filtration and removal of the retained particles to the drain. In addition, in this embodiment, the vessels 12 are connected by external piping 65.

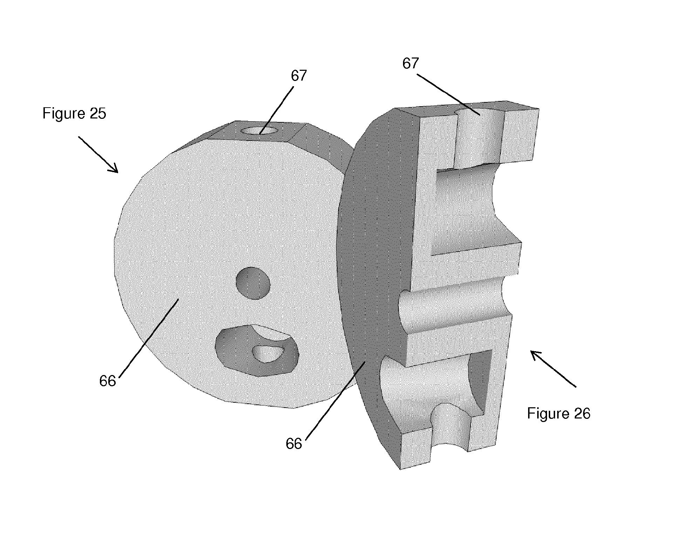

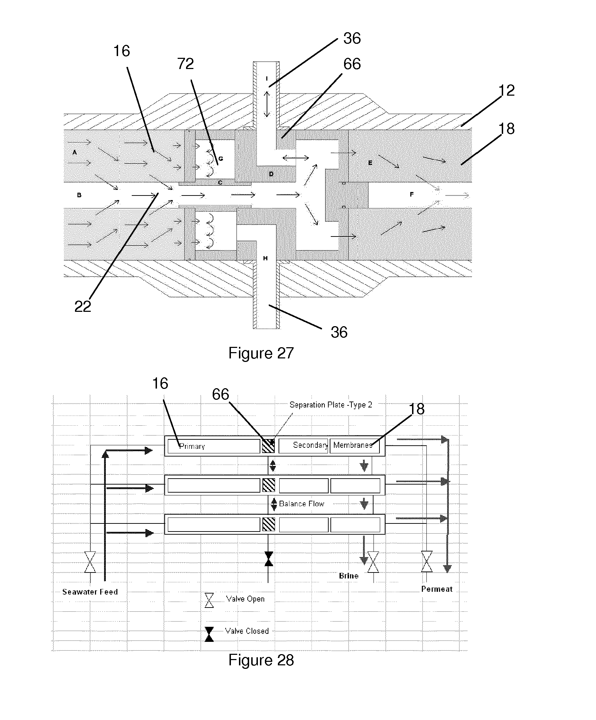

In this embodiment, an alternative flow control device in the form of a barrier plate 66 is provided. As shown in Figures 25 and 26, which show perspective and cross-sectional views respectively of the barrier plate 66 and Figure 27 which shows a cross-sectional view of the barrier plate 66 in situ, the barrier plate 66 is arranged to separate the primary membrane flow from the secondary membrane feed flow.

On the secondary stage membrane feed side, the plate is also provided with a tap 67 to allow free flow between the vessels 12 via the connection port 36, thereby permitting the feed to each set of secondary stage membranes 18 within the bank of vessels to be balanced.

Normal operation of the system will now be described with reference to Figures 24, 27 and 28. Fluid feed is passed to the vessels 12 via the feed inlet isolation valve (i). The flow rate and pressure is monitored using the flow meter 68 and pressure sensor 70. The manually actuated primary stage membrane cleaning feed valve (ii) is closed. The fluid feed passes through the primary stage membranes 16 filtering into the central collection conduit 22 and is directed through the barrier plate 66 to the secondary stage membranes 18 for further treatment. A dead-end portion of the flow through the primary stage membranes 16 is collected in a collection chamber 72. The connection port 36 is sealed by the actuated flush valve (x) and the closed cleaning valve (ix).

A portion of the flow from the primary stage membranes 16 will pass to, or be received from, one or more other vessel 12 via the connection port 36. The port 36 acts as a balance pipe where the membrane flux varies across the vessels 12.

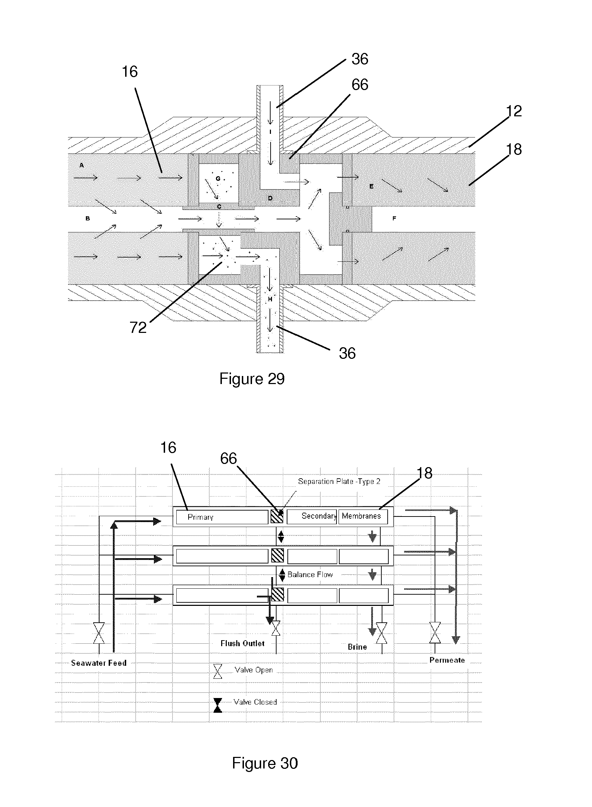

During normal operation it is expected that there will be a build up of particulates within the primary stage membranes 16. Thus, in order to facilitate removal of particulates, and with reference to Figures 24, 29 and 30, the actuated flush valve (x) will open. The vessel selection valve (iii) will select each vessel 12 in turn. In parallel to the normal operation described above, flow will pass via the collection chamber 72 and out of the connecting connection port 36 to the drain. Operation of the system may be controlled to facilitate flushing cycles at pre-determined times and for pre-determined duration. Alternatively, or in addition, the system can be manually flushed as necessary. During this operation, flow from the non-flushing primary stage membranes 16 will be received from other pressure vessels 12 via the connection port 36.

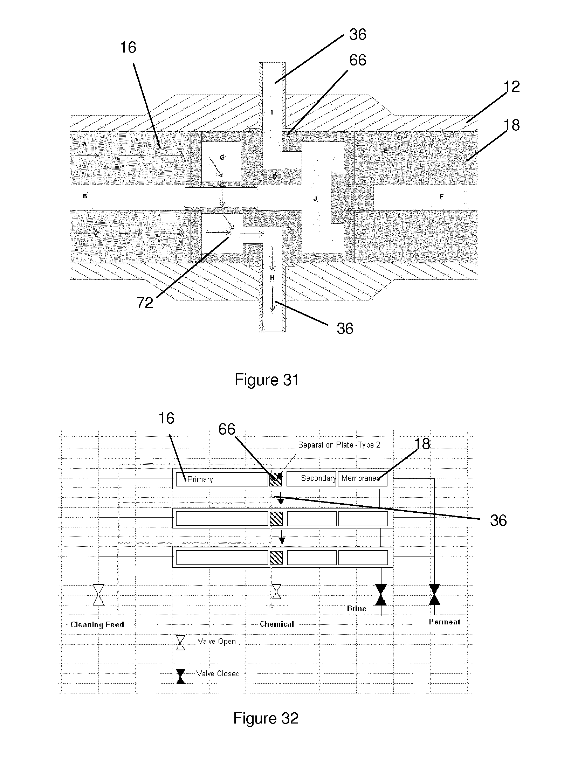

However, some fouling conditions within the primary stage membranes 16 require a more aggressive clean. As shown with reference to Figures 24, 31 and 32, for example, cleaning is carried out with the vessels off-line, cleaning enacted from a separate cleaning feed. Following the flushing of the vessels 12 with potable water, chemicals are fed to the primary stage membranes 16 via the feed inlet (Figure 32). With the feed inlet isolation valve (i) closed and the manually actuated primary membrane cleaning feed valve (ii) open, chemicals are pumped via the primary stage membranes 16 into the collection chamber 72 and out of the connecting connection port 36. With the actuated flush valve (x) closed and the valve (ix) open, the chemicals are returned back to the cleaning feed for recycling. During this cycle, the vessel selection valve (iii) will select each vessel 12 in turn resulting in periods of high velocity flow and periods of soaking for each of the vessels 12.

During cleaning of the primary stage membranes 16, the concentrate outlet control valve (v), concentrate outlet return valve (iv), permeate dump/retain valve (viii) and permeate CIP return valve (vii) are all closed so as to prevent flow into the secondary stage membranes 18. Depending on the type of chemical used, the valve (vi) connection can be open or closed. This allows chemical passage through the hollow fibres to be selected as required.

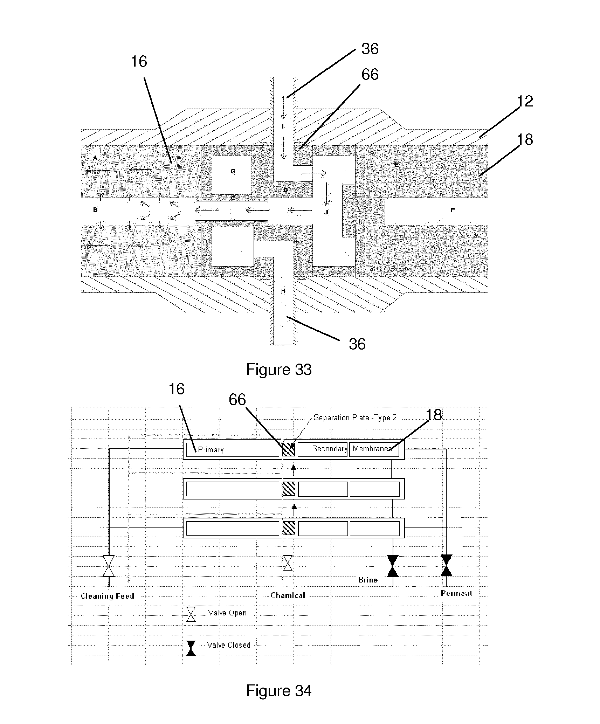

As shown in Figures 33 and 34, forward flow can also be sent via connection port 36, and valve (vi) across the primary stage membranes 16 if required.

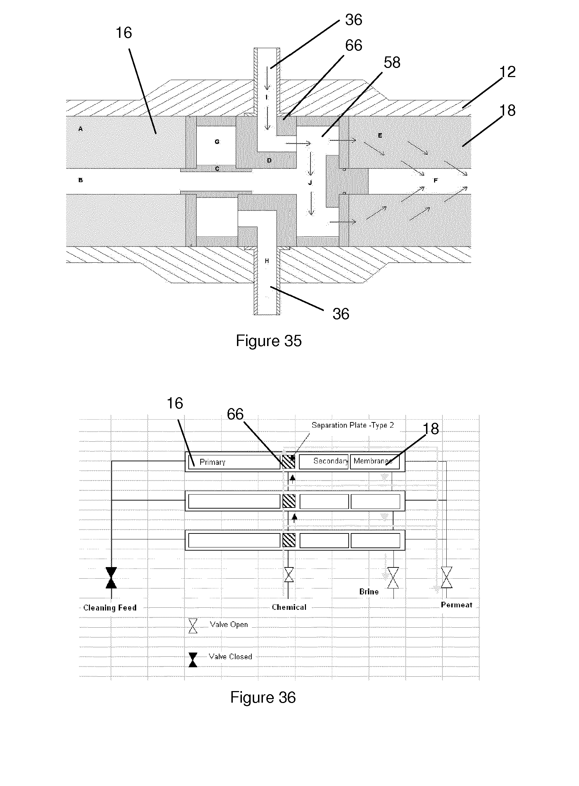

In addition, and in reference to Figures 24, 35 and 36, to clean the secondary stage membranes 18, the valve (v), valve (viii), valve (i) and the valve (ii) are closed. The valve (iv), valve (vii) and valve (vi) are open. Flow from the cleaning feed is passed via the connection port 36 to the inlet chamber 58 for the secondary stage membranes 18. The chemical passes through and across the secondary stage membranes 18 and is returned back to the cleaning feed for recycling.

Accordingly, the provision of flow control devices such as the barrier plates 52 and 66 provide for system operation in relatively high fouling applications, the barrier plates 52, 66 facilitating distinct flow paths for feed flows, cleaning and backwash flows while reducing the risks of damage to the respective membranes.

In reference now to Figures 37 to 39, there is shown a securement system 74 for use in a filtration system vessel 12, the vessel 12 adapted to contain a number of components including for example, at least one of a filtration membrane, feed inlet 76, thrust ring 78, seal plate 80, vessel end plate 82 or any other vessel component.

The securement system 74 comprises a clamp member in the form of a metallic nut 84 with an external coarse thread 86. The internal diameter of the external thread 86 is less than or equal to the vessel internal diameter and, on location in the vessel 12, the thread 86 is adapted to engage a corresponding internal thread portion 88 on the vessel 12. The nut 84 is annular and has internal castellations 90 adapted to permit turning the nut 84 to engage the threaded portions 86, 88. For example, a tool (not shown) having two or more lugs may be adapted to engage with the castellations 90 to turn the nut 84. The nut 84 may also be locked into place by a grub screw, locking wire, locking pin or the like (not shown).

In use, the nut 84 is engaged with the vessel 12 to apply a compressive force to the vessel components, thereby facilitating accurate location and securement of the vessel components to assist in minimising wear that may otherwise result in leakage. The provision of a securement system 74 also obviates the requirement for large tolerances in component design and the use of shimming as has previously been used.

The securement system 74 may be used with the filtration systems described above and/or retrofit to existing filtration systems as required.

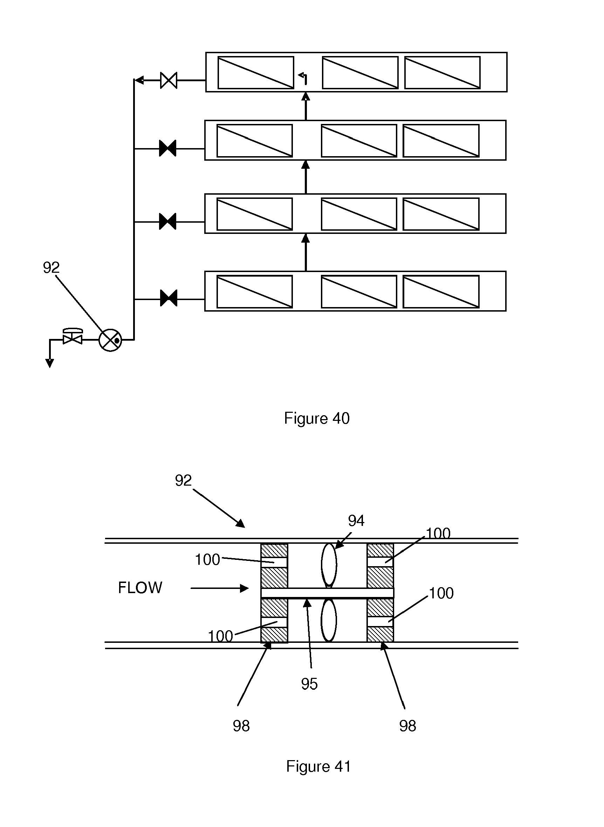

Figures 40 to 43 show a number of arrangements for providing flow pulsation in order provide a source of flow variation and attrition to assist micro stimulation of primary stage membranes during backwashing operations. Pulsation acts to loosen material in the membranes and assists with cleaning and/or backwashing operations. During normal forward operation, the backwash line is isolated and no pulsing is encountered.

Figure 40 shows a schematic diagram of an arrangement for flow pulsation using a flow driven rotary pulsation device 92. An example of a pulsation device 92 is shown in Figure 41, the device 92 comprising a rotor 94 mounted on a shaft 95 which is located in the backwash outlet line, the size, number and angle of the rotor blades 96 being determined by the severity and frequency of the pulse required. The rotor 94 is located between two mounting plates 98, or stators, each plate 98 comprising one or more orifice 100. In use, the plates 98 act as fixed orifice plates, the blades 96 adapted to selectively block flow through the orifices 100 to create a fluid flow pulse.

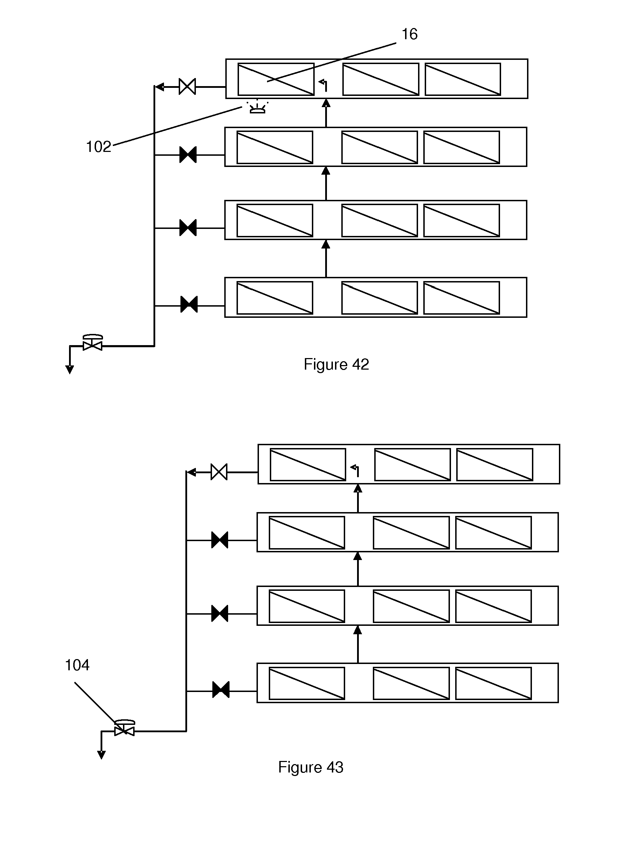

Figure 42 shows a further alternative arrangement for flow pulsation. In this embodiment, flow pulsation may be achieved by an ultrasonic transducer 102. The primary stage filtration membranes 16 are subjected to ultrasonic pulses by providing a source of ultrasonic vibration adjacent to or onto the membrane 16, the transducer 102 activated during backwashing to loosen material accumulated on the membrane 16.

Figure 43 shows an alternative arrangement for flow pulsation. In this embodiment, flow pulsation may be achieved by rapid oscillation of a control valve 104. In the embodiment shown in the Figure, pulsation is provided by a rapid oscillation of the backwash control valve 104 or alternatively by a valve provided specifically for this purpose. In use, the valve oscillation is achieved by rapidly fluctuating the valve 104 between two positions for the duration of the backwash or for set intervals during the backwash. An exemplary sequence of operation for the valve 104 is described below:
1. Backwash is initiated.
2. The backwash control valve opens and controls the flow to the backwash set point.
3. At this stage the backwash valve modulates between two positions to create a pulse in the system that assists with cleaning of the primary membranes.
4. The backwash valve can be modulated to create the pulse for the entire duration of the backwash or for intermittent intervals.
5. When complete the backwash valve is closed and the vessel returned to service.

In reference now to Figures 1 and 44 to 47 of the drawings, there is shown a vessel support assembly 14 (three assemblies 14 are shown in Figure 1) for use in supporting the filtration system 10. The support assembly 14 is adapted to improve and simplify the arrangement and installation of the membrane vessels 12 without the requirement for an intricate steel framework and complex interconnecting pipe work as is typically required.

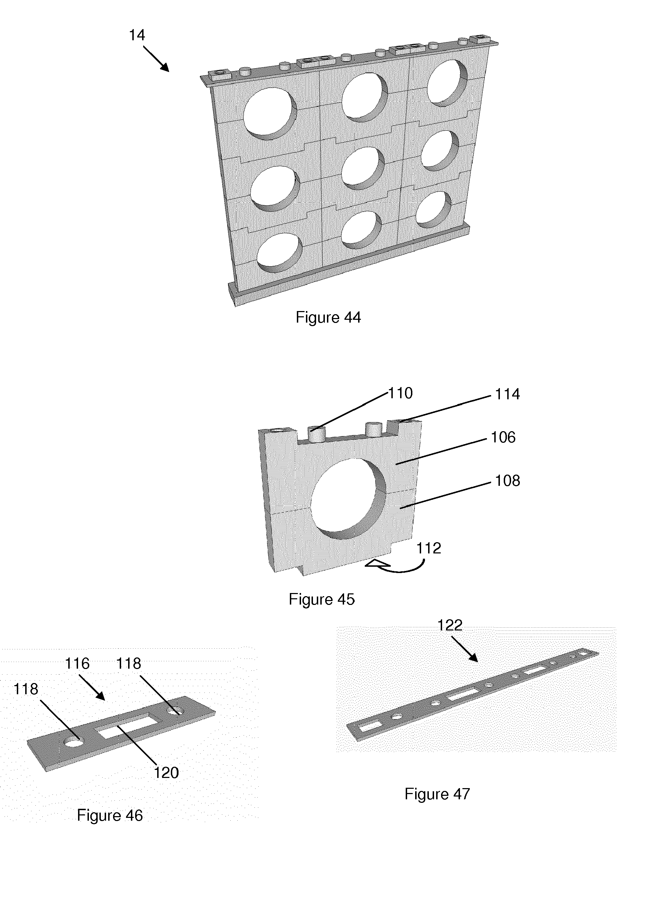

As shown in Figures 1 and 45, the assembly 14 comprises two interconnecting mounting parts 106, 108 which are clamped together around the vessel 12. The mounting parts are constructed from plastic material, assisting in reducing the mass of the system, though it will understood that any suitable material may be used as envisaged by the person skilled in the art. A plurality of mounted parts 106, 108 may be provided along the length of the vessel 12.

Each part 106, 108 comprises inter-engaging male projections 110 and female portions 112 for assisting in stacking the mounting parts together to facilitate assembly of an array of filtration vessels (as shown in Figure 1). Alternatively, the parts 106, 108 can be bonded directly to, or formed integrally with, the vessel 12. The parts 106, 108 are secured together by cap screws 114 such that the vessels 12 can be stacked in a self supporting structure, the provision of the support assembly 14 substantially eliminating the need for supporting steelwork.

As shown in Figures 44, 46 and 47, the top mounting parts 106 are secured together by a locking plate 116.

Figure 46 shows a first embodiment of the locking plate 116, the plate 116 consisting of a strip of material, typically metal, having holes 118 adapted for location over the male projections 110 and a slot 120 adapted for location over the side portions 122 of the mounting parts 106. The locking plate 116 of Figure 46 is dimensioned such that two stacks can be secured together. In an alternative embodiment, as shown in Figure 47, a locking plate 120 may comprise a plurality of holes 118 and slots 120 and the plate 120 is dimensioned in order to secure a number of stacks together, for example, as shown in Figures 1 and 44.

It should be understood that the embodiments described are merely exemplary of the present invention and that various modifications may be made without departing from the scope of the invention.

For example, it will be understood that the filtration systems described above may be provided as a kit of parts and the features and components described above may be used in any suitable combination as required by the operational requirements of the system.

In some embodiments, the assembly can be configured to permit one or more vessel to be removed from the assembly, this permitting removal of a selected vessel for replacement or repair without having to interfere with or disassemble the assembly. In one arrangement, the locking plate is removed and the mounting parts coupled to the vessel to be removed are separated, for example, by lifting or jacking the upper mounting part, thereby permitting the vessel to be removed. In an alternative arrangement, the coupling between the mounting parts and the vessel may be configured to permit the vessel to be unsecured from the mounting parts, for example by a threaded connection, bayonet-type fitting or the like, thereby permitting removal of the vessel.

### CLAUSES

1. A support assembly for a filtration system, the support assembly comprising:
   support portions for engaging upper and lower portions of a filtration vessel, the support portions adapted to be coupled together to secure the vessel between the portions.
2. The support assembly of clause 1, wherein the assembly is modular.
3. The support assembly of clause 2, wherein the support portions comprise a first portion adapted to engage a lower portion of the filtration vessel and a second portion adapted to engage an upper portion of the filtration vessel.
4. The support assembly of clause 3, wherein each mounting portion is adapted to engage a single filtration vessel.
5. The support assembly of clause 3, wherein each mounting portion is adapted to engage a plurality of filtration vessels.
6. The support assembly of any preceding clause, further comprising a locking member adapted to secure the mounting portions together.
7. The support assembly of clause 6, wherein the locking member comprises at least one of a cap screw, a pin, and a bolt.
8. The support assembly of any preceding clause, wherein the support portions are adapted for coupling together.
9. The support assembly of clause 8, wherein at least one of the support portions comprises a male connection member adapted to engage a female connector portion on another mounting portion.
10. The support assembly of any preceding clause, further comprising a locking plate adapted to engage a portion of at least two upper support portions to secure said support portions together.
11. The support assembly of any preceding clause, wherein the support portions are constructed from a plastic material.
12. The support assembly of any preceding clause, wherein the support portions are coloured to designate at least one of: the type of filtration vessel supported thereon; and the size of a filtration element housed in the vessel.
13. The support assembly of any preceding clause, wherein the assembly is configured to permit one or more of the vessels to be removed from the assembly
14. A securement system for a filtration vessel adapted to receive at least one internal component, the securement system comprising:
   a clamp member coupled to the vessel, the clamp member adapted to exert a compressive force on the vessel component to facilitate securing the component in the vessel.
15. The securement system of clause 14, wherein the clamp member is adapted to be secured to the vessel in order to apply a compressive force to at least one of the vessel components.
16. The securement system of clause 15, wherein the clamp member is adapted to be secured to the vessel in order to apply a compressive force to at least one of a filtration element, thrust ring, vessel end plate, and feed inlet component.
17. The securement system of any one of clauses 14, 15 or 16, wherein the clamp member comprises an external threaded surface for engaging an interior threaded surface of the vessel.
18. The securement system of any one of clauses 14 to 17, wherein the clamp member comprises an interior surface configuration adapted to facilitate coupling of the clamp member to the vessel.
19. The securement system of clause 18, wherein the interior surface configuration of the clamp member is castellated.
20. The securement system of any one of clauses 14 to 19, wherein the clamp member is hollow.
21. The securement system of any one of clauses 14 to 20, wherein the clamp member comprises an annular ring.
22. The securement system of any one of clauses 14 to 21, wherein the clamp member is adapted to engage a tool for facilitating turning of the clamp member.
23. A filtration system having at least two vessels adapted to be coupled together, each vessel comprising:
   a housing adapted to receive a filtration element for filtering a fluid feed;
   an outlet port for directing concentrate produced by the filtration element from the vessel;
   a chamber adapted to receive permeate produced by the filtration element of the vessel and the filtration element of at least one other vessel; and
   an outlet port for directing permeate received in the chamber from the vessel.
24. The system of clause 23, wherein the vessels are adapted to be directly coupled together.
25. The system of clause 24, wherein at least one of the vessel ports is directly coupled to a port of another vessel.
26. The system of any one of clauses 23, 24 or 25, wherein the, or each, vessel further comprises a chamber adapted to receive concentrate produced by the filtration element of the vessel and the filtration element of at least one other vessel.
27. The system of clause 26, wherein the, or each, vessel further comprises a conduit for directing permeate from the vessel to the chamber.
28. The system of clause 27, wherein the conduit is adapted to isolate the permeate produced by the filtration element from concentrate produced by the filtration element.
29. The system of any one of clauses 23 to 28, wherein the, or each, vessel further comprises a sampling port adapted to facilitate permeate testing.
30. The system of clause 29, wherein the sampling port is adapted to facilitate testing of permeate from a single vessel.
31. The system of clause 28, wherein the sampling port is adapted to facilitate testing of permeate from the at least two vessels.
32. The system of any one of clauses 29, 30 or 31, wherein the sampling port comprises a valve.
33. The system of clause 32, wherein the valve comprises a valve member which is adapted to move relative to the vessel to permit testing of the permeate.
34. The system of clause 33, wherein the valve member is adapted to enter the conduit to facilitate testing of permeate from a single vessel.
35. The system of clause 33 or 34, wherein the valve member is adapted to enter the chamber to permit testing of permeate in the chamber.
36. The system of any one of clauses 23 to 35, wherein the vessels are adapted to be coupled together in at least one of a parallel arrangement, series arrangement and a combination of parallel and series arrangements.
37. The system of any one of clauses 23 to 36, further comprising at least one connection port for coupling the vessel to at least one other vessel.
38. The system of any one of clauses 23 to 37, wherein the permeate outlet port is located at the side of the vessel.
39. The system of any one of clauses 23 to 38, wherein the, or each, vessel comprises a plurality of filtration elements.
40. The system of clause 39, wherein the filtration elements are of circular cross-sectional shape.
41. The system of any one of clauses 23 to 40, wherein the filtration elements comprise filtration membranes.
42. The system of clause 41, wherein at least one of the filtration elements comprises an eight inch (203.2mm) filtration membrane.
43. The system of clause 41 or 42, wherein at least one of the filtration elements comprises a sixteen inch (406.4mm) filtration membrane
44. The system of any one of clauses 41, 42 or 43, wherein at least one of the filtration elements comprises an eighteen inch (457.2mm) filtration membrane.
45. The system of any one of clauses 23 to 44, wherein at least one of the filtration elements comprises at least one of a reverse osmosis membrane and a nanofiltration membrane.
46. The system of any one of clauses 23 to 45, wherein at least one of the filtration elements comprises at least one of a microfiltration membrane and an ultrafiltration membrane.
47. The system of any one of clauses 23 to 46, wherein the vessel is adapted to house at least two filtration elements, the filtration elements comprising at least a primary stage filtration element and a secondary stage filtration element.
48. The system of clause 47, wherein a plurality of filtration elements are provided in each of the primary and secondary stages.
49. The system of clause 47 or 48, wherein the vessel comprises or defines a connection device for location between the at least one primary stage filtration element and the at least one secondary stage filtration element.
50. The system of clause 49, wherein the device is coupled to at least one of the filtration elements, thereby facilitating interconnection between the filtration elements.
51. The system of clause 49 or 50, wherein the device forms a spacer between the filtration elements.
52. The system of any one of clauses 49, 50 or 51, wherein the device defines a chamber between the filtration elements.
53. The system of any one of clauses 49 to 52, when dependent on clause 38, wherein the device defines a chamber between the filtration elements for permitting fluid access to the connection ports.
54. The system of any one of clauses 23 to 53, wherein the system is adapted to split the fluid feed between the at least two filtration elements.
55. The system of clause 54, wherein the system is adapted to split the fluid feed in substantially opposing directions along the vessel.
56. The system of any one of clauses 47 to 55, wherein permeate output from a primary stage element in one vessel is directed to either of the primary stage or second stage element in another vessel.
57. The system of any one of clauses 47 to 56, wherein the vessel further comprises a flow control device for directing fluid flow between the primary stage filtration element and the secondary stage filtration element.
58. The system of clause 57, wherein the flow control device comprises at least one of a barrier member and a valve.
59. The system of any one of clauses 39 to 58, wherein the system is configured to permit testing of one or more of the plurality of filtration elements in a vessel.
60. The system of clause 59, when dependent on one of clauses 29 to 35, wherein the sampling port is adapted to facilitate testing of permeate from one or more of the plurality of filtration elements in a vessel.
61. The system of any one of clauses 23 to 58, further comprising a securement system for securing the components within the, or each, vessel.
62. The system of clause 61, wherein the securement system comprises a clamping member coupled to the vessel, the clamping member adapted to apply a compressive force to the vessel components.
63. The system of any one of clauses 23 to 62, comprising flow pulsation means to assist in removing particulate matter from at least one of the filtration elements.
64. The system of clause 63, wherein the flow pulsation means comprises a rotary flow pulsation device adapted for location in a system fluid conduit, the device adapted to rotate in response to fluid flow over the device to produce fluid pulses.
65. The system of clause 64, wherein the flow pulsation device is adapted for location in a backwash fluid conduit.
66. The system of any one of clauses 63, 64 or 65, wherein the flow pulsation means comprises an ultrasonic pulsation device adapted to produce ultrasonic excitation of particulate matter to assist in removing particulates from at least one of the filtration elements.
67. The system of any one of clauses 63 to 66, wherein the flow pulsation means comprises a valve adapted to produce flow pulses.
68. The system of any one of clauses 23 to 67, further comprising a support assembly for securing the filtration vessels together.
69. The system of clause 68, wherein the support assembly comprises support portions for engaging upper and lower portions of a filtration vessel, the support portions adapted to be coupled together to secure the vessel between the support portions.
70. A vessel for use in the filtration system of any of clauses 23 to 69.
71. A flow control device for location in a filtration system vessel, the device comprising:
   a first chamber adapted to receive fluid from at least one of a first filtration element and a fluid inlet; and
   a second chamber adapted to receive fluid from the first filtration element, the device arranged to direct fluid from the second chamber to at least one of a fluid outlet and a second filtration element.
72. The device of clause 71, wherein the device is arranged so that the first chamber is located adjacent to the first filtration element and the second chamber is located downstream from the first filtration element.
73. The device of clause 71, wherein the device is arranged so that the first chamber is located downstream from the filtration element and the second chamber is located adjacent to the first filtration element.
74. The device of any one of clauses 71, 72 or 73, wherein the first chamber is adapted to receive permeate from the first filtration element.
75. The device of any one of clauses 71, 72 or 73, wherein the first chamber is adapted to receive concentrate from the first filtration element.
76. The device of any one of clauses 71 to 75, wherein the device comprises at least one of a barrier member and a valve.
77. The device of any one of clauses 71 to 76, wherein the device is constructed from at least one of a plastic material, a metal material, a ceramic material, a glass material.
78. The device of any one of clauses 71 to 77, wherein the device is constructed from a plastic material which is resistant to cleaning agents.
79. The device of any one of clauses 71 to 78, wherein the device is constructed by an injection moulding process.
80. The device of any one of clauses 71 to 79, wherein the device is constructed from a single component.
81. The device of any one of clauses 71 to 79, wherein the device is constructed from a plurality of components adapted to be coupled together.
82. A flow pulsation device for use in a filtration system.
83. The flow pulsation device of clause 82, comprising a rotor adapted for location in a backwash flow conduit of a filtration system, the rotor adapted to rotate in response to backwash fluid flow over the rotor.
84. The flow pulsation device of clause 83, wherein the rotor is adapted to be secured within the conduit.
85. The flow pulsation device of any one of clauses 82, 83 or 84, further comprising at least one barrier member located in a fluid flow path of the filtration system.
86. The flow pulsation device of clause 85, wherein the barrier member comprises at least one orifice for permitting fluid flow through the barrier member.
87. The flow pulsation device of clause 86, when dependent on clause 83, wherein the orifice and rotor are adapted to produce pulses in the fluid flow which assist in removing particulate matter from the filtration element.
88. The flow pulsation device of clause 82, wherein the device comprises a control valve adapted for rapid oscillation to provide flow pulsation.
89. The flow pulsation device of clause 82, wherein the device comprises an ultrasonic transducer.

## Claims

1. A filtration system having at least two vessels adapted to be coupled together, each vessel comprising:
a housing adapted to receive a filtration element for filtering a fluid feed;
an outlet port for directing concentrate produced by the filtration element from the vessel;
a chamber adapted to receive permeate produced by the filtration element of the vessel and the filtration element of at least one other vessel; and
an outlet port for directing permeate received in the chamber from the vessel.

2. The system of claim 1, wherein the vessels are adapted to be directly coupled together, and wherein optionally at least one of the vessel ports is directly coupled to a port of another vessel.

3. The system of claim 1 or 2, wherein the, or each, vessel further comprises a chamber adapted to receive concentrate produced by the filtration element of the vessel and the filtration element of at least one other vessel.

4. The system of claim 1, 2 or 3, wherein the, or each, vessel further comprises a conduit for directing permeate from the vessel to the chamber,
and wherein optionally the conduit is adapted to isolate the permeate produced by the filtration element from concentrate produced by the filtration element.

5. The system of any preceding claim, wherein the, or each, vessel further comprises a sampling port adapted to facilitate permeate testing from at least one vessel.

6. The system of any preceding claim, wherein the permeate outlet port is located at the side of the vessel.

7. The system of any preceding claim, wherein the, or each, vessel comprises a plurality of filtration elements.

8. The system of any preceding claim, wherein at least one of the filtration elements comprises at least one of: a reverse osmosis membrane; a nanofiltration membrane; a microfiltration membrane; and an ultrafiltration membrane.

9. The system of any preceding claim, wherein the system is adapted to split the fluid feed in substantially opposing directions along the, or each, vessel.

10. The system of any preceding claim, wherein the, or each vessel is adapted to house at least two filtration elements, the filtration elements comprising at least a primary stage filtration element and a secondary stage filtration element, and wherein the vessel further comprises a flow control device for directing fluid flow between the primary stage filtration element and the secondary stage filtration element.

11. The system of any preceding claim, further comprising a securement system for securing the components within the, or each, vessel, and wherein optionally the securement system comprises a clamping member coupled to the vessel, the clamping member adapted to apply a compressive force to the vessel components.

12. The system of any preceding claim, comprising flow pulsation means to assist in removing particulate matter from at least one of the filtration elements, and wherein optionally the flow pulsation device is adapted for location in a backwash fluid conduit.

13. The system of claim 13, wherein the flow pulsation means is selected from the group consisting of:
a rotary flow pulsation device adapted for location in a system fluid conduit, the device adapted to rotate in response to fluid flow over the device to produce fluid pulses;
an ultrasonic pulsation device adapted to produce ultrasonic excitation of particulate matter to assist in removing particulates from at least one of the filtration elements; and
a valve adapted to produce flow pulses.

14. The system of any preceding claim, further comprising a support assembly for securing the filtration vessels together,
and wherein optionally the support assembly comprises support portions for engaging upper and lower portions of a filtration vessel, the support portions adapted to be coupled together to secure the vessel between the support portions.

15. A vessel for use in the filtration system of any preceding claim.
